(19) Europäisches Patentamt
European Patent Office
Office européen des brevets

(11) **EP 3 768 112 B1**

(12) **EUROPEAN PATENT SPECIFICATION**

(45) Date of publication and mention
of the grant of the patent:
**15.02.2023 Bulletin 2023/07**

(21) Application number: **19711134.7**

(22) Date of filing: **21.03.2019**

(51) International Patent Classification (IPC):
**G06F 30/17** *(2020.01)* **B33Y 50/00** *(2015.01)*

(52) Cooperative Patent Classification (CPC):
**A45C 13/26; B25G 1/102; B33Y 50/00;
B33Y 80/00; G06F 30/17;** G06F 2111/16;
G06F 2113/10

(86) International application number:
**PCT/EP2019/057083**

(87) International publication number:
**WO 2019/180138 (26.09.2019 Gazette 2019/39)**

(54) **HANDLE CORE AND HANDLE MANUFACTURING METHOD FOR A HAND LUGGAGE**

GRIFFKERN UND GRIFFHERSTELLUNGSVERFAHREN FÜR EIN HANDGEPÄCK

NOYAU DE POIGNÉE ET PROCÉDÉ DE FABRICATION DE POIGNÉE POUR BAGAGE À MAIN

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **21.03.2018 EP 18163093**

(43) Date of publication of application:
**27.01.2021 Bulletin 2021/04**

(73) Proprietor: **Richemont International SA
1752 Villars-sur-Glâne (CH)**

(72) Inventor: **DAGUET, Léo
01280 Prévessin Moëns (FR)**

(74) Representative: **Vigand, Philippe et al
Novagraaf International SA
Chemin de l'Echo 3
1213 Onex - Genève (CH)**

(56) References cited:
**WO-A1-2016/154340 US-A1- 2006 137 144**

**Description**

The present invention relates to the manufacturing of a handle for a hand luggage. In particular, the present invention aims to provide a manufacturing method for a handle core, which will be further coated, treated, finished or wrapped to form a handle to be attached to a hand luggage, such as a leather luggage, a leather good with a handle, forming a hand bag or a suitcase.

It is important to propose a handle which is easy to grasp and hold for a user, so as to minimize any stress and discomfort. Document FR1112170A describes a moulding method to manufacture a handle dedicated to a user. However, this method is quite long to implement, requires multiple moulding steps, and might be not well perceived by the user who has to contact and press a deformable material for taking an initial print of his hand.

Document US2006137144A1 discloses the manufacturing of a handle taking into account the dimensions of the user hand. However, this document does not address the issue of composite handles, typically comprising a core which is further subjected to a surface treatment such as painting or covering.

Document WO2016154340A1 discloses a customizable handle for a knife. However, this document does not address the specific field of handles and handle cores for hand luggage, where the requirements differ from the field of hand tools.

The present invention aims to address the above mentioned drawbacks of the prior art, and to propose first a method for manufacturing a dedicated or customized handle core of a hand luggage, which is easy and fast to implement, with limited and easy actions or requirements to supply from the user.

In this aim, a first aspect of the invention is a method of manufacturing a handle core for a hand luggage, comprising the steps of:

- providing at least one dimension of a user's hand,
- generating a handle core model, based on said at least one provided dimension,
- manufacturing a hand luggage handle core, according to the handle core model,

wherein the step of generating the handle core model comprises a step of calculating a radius (r) of middle portion of the handle core (15), and wherein:

$$\frac{0.2 * l}{\pi} \leq r \leq \frac{0.4 * l}{\pi}$$

and more advantageously, wherein:

$$r = \frac{0.3 * l}{\pi}$$

with:

r: radius of the middle portion of the handle core (mm),
l: measured length of the user's hand (mm).

According to the above embodiment, the method simply requires a dimension of the user's hand to generate the handle core model (via computer aided technology for example) and to manufacture the handle core, which is limited involvement from the user, and the digital generation of the handle core model, taking into account this dimension, is fast. In other words, there is no moulding step of the user's hand.

Alternatively, the invention relates to a method of manufacturing a handle core for a hand luggage , comprising the steps of:

- providing at least one dimension of a user's hand,
- generating a handle core model, based on said at least one provided dimension,
- selecting one given handle core among a plurality of pre manufactured hand luggage handle cores, said given handle core corresponding to the generated handle core model,

wherein the step of generating the handle core model comprises a step of calculating a radius (r) of middle portion of the handle core, and wherein:

$$\frac{0.2 * l}{\pi} \leq r \leq \frac{0.4 * l}{\pi}$$

and more advantageously, wherein:

$$r = \frac{0.3 * l}{\pi}$$

with:

    r: radius of the middle portion of the handle core (mm),
    l: measured length of the user's hand (mm).

Advantageously, the method comprises a step of manufacturing the plurality of hand luggage handle cores.

According to the above alternative, the method encompass the possibility of manufacturing several handle cores, and to select the most adequate handle core, when the handle core model is generated, based on the actual user's hand size. This provides a fast overall process, as the handle cores are already manufactured when the user's hand is measured. Consequently the supply of a handle core fitting perfectly the user hand is almost immediate. It has to be born in mind that the order of the steps might not be the one as above detailed. In particular, the step of manufacturing a plurality of hand luggage handle cores might easily be performed well in advance to the step of providing/measuring at least one dimension of a user's hand.

The above method is particularly well suited for proposing a customized handle to a user. Indeed, it is easy to stock a set of a plurality of pre-manufactured handle cores in back office of a store or a retailing place, so as to be able to pick the adequate handle core, after measurement of the user's hand and generation of the handle core model. This gives possibility to provide the adequate surface treatment to the core, for fitting to the user hand (as the core has been chosen in view of the hand size), and to the chosen hand luggage (as the core has been coated, wrapped or painted in accordance to the chosen hand luggage).

Advantageously, the manufacturing step uses an additive technique. Such additive technique, or 3D printing, is easy to implement even in a shop or retailing centre to manufacture (in front of the client) the handle core, to personalize the hand luggage on demand. In addition, such additive technique is not limited to plastic materials, and might be implemented even for manufacturing a metallic handle core.

Advantageously, the step of providing at least one dimension of a user's hand is performed with a digital instrument having a display, the method further comprising the steps of:

- displaying on the digital instrument the handle core model for a user review,
- receiving an agreement from the user via the digital instrument. The above embodiment is user friendly and allows the user to immediately see the handle core before manufacturing.

Advantageously, the method comprises a step of recording if the user is a left handed or right handed person, and the step of generating the handle core model might comprise a step of performing a mirror symmetry if the user is a left handed person.

Advantageously, the digital instrument is a hand held electronic device (such as a laptop computer, a tablet computer), or a check-in machine. This kind of digital instrument is easy to provide to the user. Advantageously, the screen is a touch screen.

Advantageously, the generation of the handle core model is performed with the digital instrument.

Advantageously, the method of manufacturing a handle core comprises an initial phase of collecting and/or measuring a set of anthropometrical data, and the step of generating the handle core model comprises a step of calculating a dimension of the handle core model taking into account at least one of the collected anthropometrical data. The method comprises an initial phase of gathering a set of measures of a sample of persons' hands and body measurements (with physical measures), to get an accurate and statistical set of data from a representative sample size, so as to be able to determine, with one measurement done on the user willing a dedicated handle, other measures or ranges of values needed for generating the handle core model. In other words, this initial phase of gathering (measuring from a representative sample of persons) anthropological data enables deducing relevant dimensions from the user, using only one measure of the user's body: less involvement of the user is needed, and only partial measures are still enough to generate the full handle core model.

Advantageously, the step of generating the handle core model comprises a step of calculating a radius (r) of a middle portion of the handle core, and wherein:

$$\frac{0.2 * l}{\pi} \leq r \leq \frac{0.4 * l}{\pi}$$

and more advantageously, wherein:

$$r = \frac{0.3 * l}{\pi}$$

with:

r: radius of the middle portion of the handle core (mm),
l: measured length of the user's hand from middle finger end to palm/wrist limit (mm). The calculated radius r is the radius of the handle core model in its middle portion.

As an example, with a hand length of 178 mm, in the above formula, a factor of 0.2 leads to a handle core diameter of 2.3 cm, a factor of 0.3 leads to a handle core diameter of 3.4 cm, a factor of 0.4 leads to a handle core diameter of 4.6 cm

Advantageously, the method of manufacturing a handle core comprises, before the step of receiving the user's agreement, a step of receiving a request for modification of the displayed handle core model and a step of recalculating at least one of the dimensions of the handle core model. The method comprises a step of taking into account a request for modification, which can be easily made when the handle core model is displayed, so as to further customize the handle core. Therefore, the final handle will offer optimized ergonomics / comfort to the user.

Advantageously:

the step of displaying the handle core model comprises:

- a step of displaying the handle core model, and/or a cross section of the handle core model, and/or a profile of the handle core model on a touch screen,

the step of receiving a request for modification comprises:

- a step of measuring a displacement of at least one contact on the touch screen of a user's finger,

the step of recalculating at least one dimension of the handle core model taking into account the measured displacement. In other words, the user can pinch or slide the handle core model or specific points of the handle core model to customize the handle core model.

Advantageously, the method of manufacturing a handle core comprises a step of displaying the recalculated handle core model before receiving the user's agreement.

Advantageously, the recalculated dimension is limited to differ from the initially generated dimension of ±20% maximum. To still insure correct ergonomics, the handle core cannot be (too) severely modified with the ±20% limits.

Advantageously, the recalculated dimension is a height of an axial bump arranged to face a user's palm or user's finger articulation, or a depth of a transverse notch arranged to face a user's finger.

Advantageously, the handle core model comprises:

- a bump arranged to face a user's palm or user's finger articulation, and/or
- at least one transverse notch arranged to face a user's finger, and the step of receiving a request for modification of the displayed handle core model comprises a step of receiving a request for accentuating or minimizing the bump and/or the transverse notch.

In other words, the user can accentuate or minimize:

- the bump which will fit into the palm of his hand, and/or;
- the notch(es) where his fingers will fall into.

Advantageously, the handle core model comprises at least one through hole arranged to fit with or receive a rod or handle of the hand luggage, and the method comprises a preliminary step of measuring the size of the rod or handle of the hand luggage, to set the correct size of the through hole.

Advantageously, the handle core model comprises a lower part and an upper part. This is particularly well adapted when the hand luggage (a handbag) comprises two handles : the handle core model comprises two through holes, and the upper part and lower part each define a part of the through holes, so that assembly is easier, as the lower and upper parts are two halves or two half shells, designed to sandwich the two handles of the handbag. In particular, while setting the handle core model dimensions, the user can define the size of the through holes, to have the customized ability of the handle core to slide over the handbag handles : large gap to have easy sliding, or small gap to have reduced capacity of sliding.

In particular, the lower part and the upper part are dissymmetric. In other words, the lower part and the upper part do not present the same thickness, so that the at least through hole is not in the centre of the handle core. Advantageously, the lower part is thinner than the upper part.

Advantageously, the lower part and the upper part are hinged.

Advantageously, the handle core model comprises a recess so that the handle core comprises a hollow portion arranged to receive an edge of a sheath. Such hollow portion can facilitate the covering of the handle core with a leather part or fabric part, as the hollow portion can receive a flap or an inner cover of the sheath for performing a stitching or seam not protruding from the handle.

Advantageously, the step of providing at least one dimension of the user's hand with the digital instrument comprises the steps of:

- detecting a contact of the user's hand to be measured on the display,
- displaying hand limits on the display,
- authorizing displacement of the hand limits by a contact of the user on the display,
- deducing the user's hand dimension based on a final position of the hand limits on the display. The hands limits can be represented as limit lines, which have to be adjacent or tangent to the user hand placed on the screen. Advantageously, the method displays four hand limits (two vertical and two horizontal) and authorizes a sliding of the hand limits in only one direction, preferably transverse to the hand limit.

Advantageously, the step of providing at least one dimension of the user's hand with the digital instrument comprises the steps of:

- displaying a target where the user shall place his hand on the display of the digital instrument. The displayed target helps to correctly position the user's hand.

Alternatively or in addition, the step of providing at least one dimension of the user's hand with the digital instrument comprises the steps of:

- taking a picture of the user's hand, or
- positioning the user's hand between a camera and a contrasting background, and detecting the user's hand based on a contrast analysis.

A second aspect of the invention relates to a method of manufacturing a handle for a hand luggage,

comprising the method of manufacturing a handle core according to the first aspect of the invention, and comprising a step of coating an external surface of the handle core, or applying a surface treatment to an external surface of the handle core, or performing a surface finishing, or wrapping the handle core with an external layer or sheath. The handle core might be painted, polished, coated with Physical vapor deposition (PVD), anodized, wrapped with leather, fabric... to obtain the final handle for the hand luggage.

Alternatively, the method of manufacturing the handle comprises:

- a step of collecting and/or measuring a set of anthropometrical data,
- a step of calculating a dimension of the handle core model taking into account at least one of the collected anthropometrical data, and
- a step of selecting one handle core among a set of already manufactured handle cores, matching the calculated dimension. In particular, the a set of already manufactured handle cores comprises 5, or 10 or 15 handle cores, chosen to cover for example 99% of the population. Therefore, the manufacturing is customized to the user, and extremely fast, as using an already manufactured handle core.

Advantageously, the method of manufacturing a handle comprises:

- a step of acquiring a user's height or a user's hand-to-ground distance,
- a step of determining an orientation angle ($\alpha$) between the handle core and a connecting rod of the hand luggage, taking into account the user's height or user's hand-to-ground distance,
- a step of assembling the handle core onto the connecting rod of the hand luggage, with respect of the orientation angle ($\alpha$). The method, based on the user's height or user's hand-to-ground distance (which can be measured or deduced from another measured dimension of the user), calculates the optimum angle between the handle core (having an angular feature, such as a bump to face user's palm or a notch to face user's finger) and the connecting rod of the hand luggage (typically a roller suitcase in this embodiment).

Advantageously, the determined orientation angle ($\alpha$) between the handle core and a connecting rod of the hand luggage is respecting the following formula:

$$\arcsin(\frac{0.250 * h}{Dh}) \leq \alpha \leq \arcsin(\frac{0.460 * h}{Dh})$$

and more advantageously, wherein:

$$\alpha = \arcsin(\frac{0.377 * h}{Dh})$$

with:

h: user's height (mm),
Dh: Deployed height of the hand luggage (mm).

Advantageously, the method of manufacturing a handle comprises:

- a step of determining an axial angle between the handle core and a mono-connecting rod,

- a step of assembling the handle core onto the mono-connecting rod of the hand luggage, with respect of the axial angle. In the case where the hand luggage is a roller suitcase having a single connecting rod between the luggage and the handle, the method authorizes to customize the axial angle, being an angle, in a plane perpendicular to the mono-connecting rod, between a longitudinal axis of the handle and a projection of a front or rear side of the luggage.

Other features and advantages of the present invention will appear more clearly from the following detailed description of particular non-limitative examples of the invention, illustrated by the appended drawings where:

- figure 1 represents a general view of a hand luggage equipped with a handle ;
- figure 2 represents a front view of a handle core of the handle of figure 1;
- figure 3 represents an alternative of a handle core for a hand luggage;
- figures 4a and 4b represent a cross section of the handle core of figure 2 or 3;
- figure 5 represents body dimensions of a user, used for the method of manufacturing the handle core of figures 2, 3, 4a, 4b;
- figure 6 represents an assembly of the handle core shown figures 4a, 4b, on a connecting rod of the luggage of figure 1;
- figure 7 shows steps of the method of manufacturing the handle core and handle of figure 1 ;
- figure 8 represents an alternative handle for a handbag ;
- figure 9 represents a face view of the handle of figure 8.

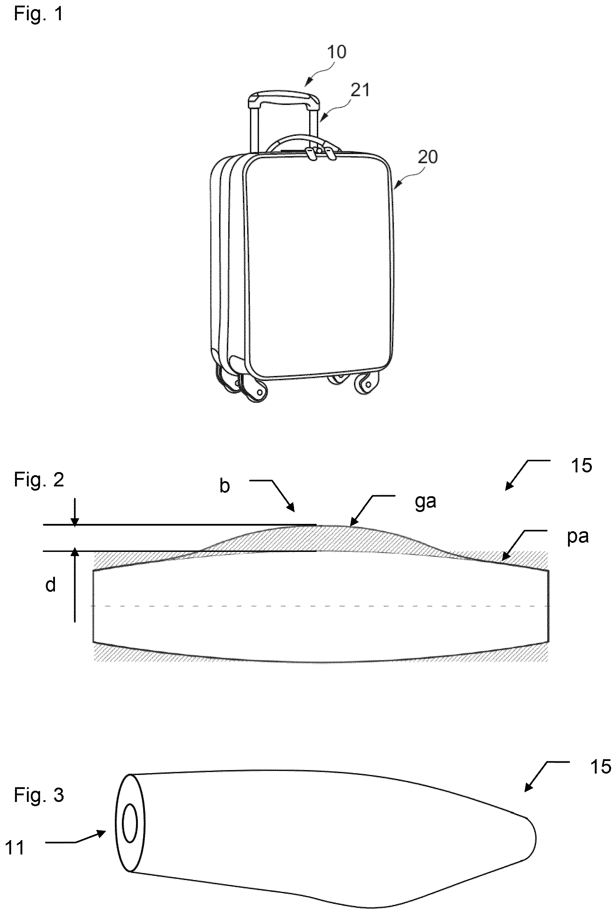

Figure 1 shows a hand luggage 20 (a roller suitcase in the present case), comprising a handle 10 attached to two connecting rods 21 of the hand luggage 20. It is to be understood that the hand luggage might be a hand bag, a suitcase, a briefcase, manufactured with fabric, leather or other materials. There might be also only one or no connecting rods contrary to the present embodiment.

The invention aims to provide an ergonomic and comfortable handle, manufactured specifically to the user's morphology.

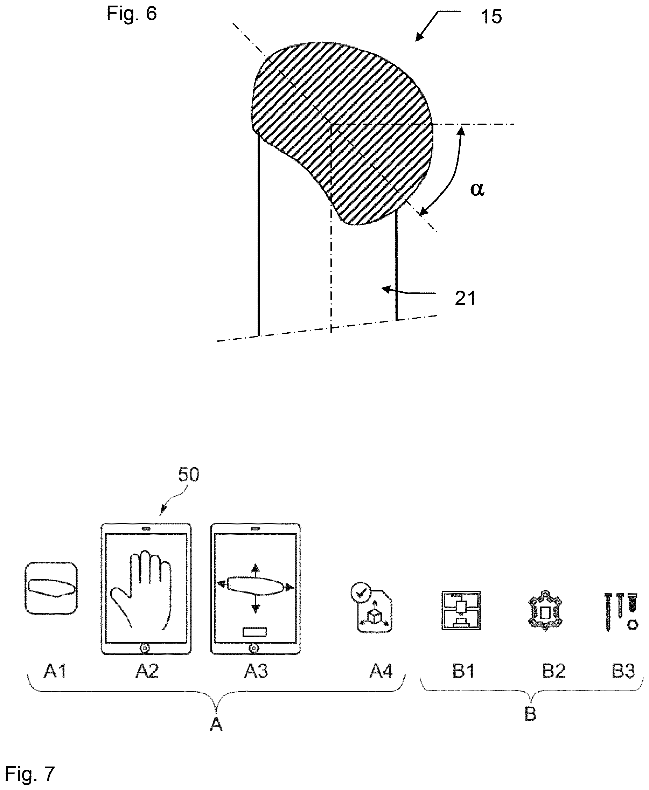

In this aim, figure 7 shows an example of the method according to the invention, with a phase A where dimensions of the user body (and hand in particular) are gathered/measured, and a phase B, where an handle core 15 and handle 10 are manufactured.

In present embodiment, the method is carried out through a computer tablet 50, but it can be equally ran with a laptop, a check in machine: a digital instrument, in other words.

Phase A starts as shown figure A1 where users clicks an icon to launch a dedicated application.

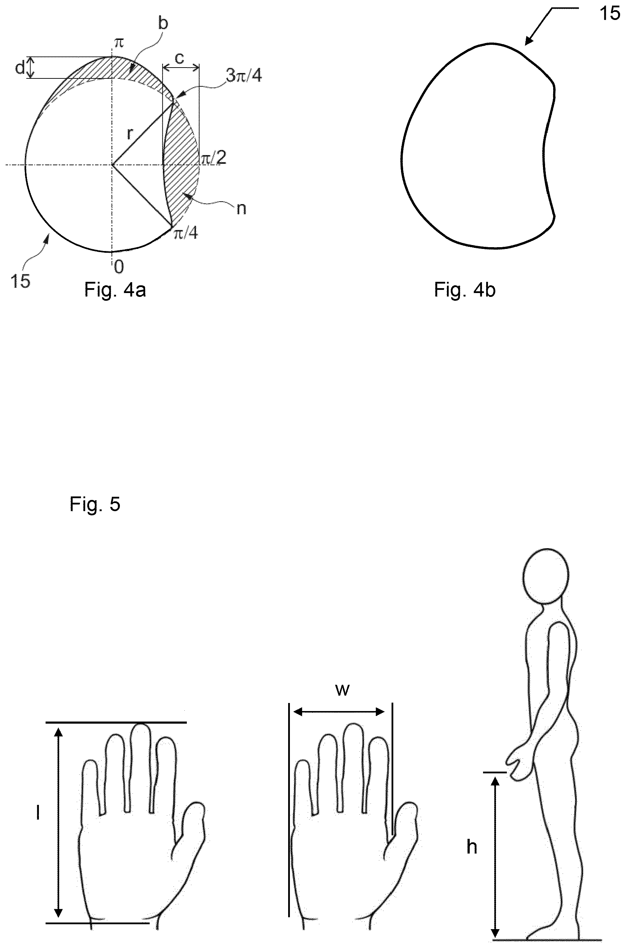

Figure A2 shows the user placing his hand onto the display and adjusting the position of displayed hand limits to be tangent or adjacent to his hand, so that the system (the computer tablet or a remote server) can deduct hand dimensions from this measure, such as hand length (l) or hand width (w) as shown figure 5. In this step, the user can also fill in his height or hand distance (h) with ground (also shown figure 5). Picture analysis can also be used to deduce the hand or user dimensions.

From these data, the system can generate a handle core model dedicated to the user, shown on figure A3 on the display of the computer tablet 50. The arrows show also the possibility for the user to modify, on the touch screen, the handle core model being further customized.

Figure A4 shows an agreement given by the user, to freeze the handle core model dimensions.

Figure B1 shows schematically a 3D printer, to build the handle core 15 according to the handle core model specifications and dimensions.

Leather logo figure B2 designates a step of manufacturing the final handle 10 (typically, the handle core 15 is wrapped into a leather foil, but it can be painted, coated or finished with polishing for example).

Figure B3 shows the final assembly of the handle 10 onto the hand luggage 20.

Figure 2 shows a typical shape of a handle core manufactured according to the invention. Lower portion and upper side portions of the external surface present a parabolic shape pa. The upper central portion presents a bump b extending partially along the handle core length, with a Gaussian shape ga, and protruding of a distance d.

Figure 3 shows an alternative shape for the handle core 15, with a hole 11 for attachment to the connecting rod 21 of figure 1. In this embodiment, the handle core 15 is attached only via its left side of figure 3, to a mono-connection rod (in other words, the suitcase or hand luggage 20 comprise only one connecting rod 21).

Figures 4a and 4b show a cross section of the handle core 15 (figure 4a with dimensions, figure 4b, only the outer perimeter), comprising a bump b arranged to be in regards of a user's palm or fingers' articulation or joint. The bump b is protruding by a distance d from a nominal radius r, d being greater than r/10.

The handle core 15 can also be shaped so as to present notches n, arranged to face fingers of the user. These notches n might present an angular height of 90° ± 30°, and a depth c, being up to r/2. The longitudinal spacing of the notches might be determined according to the hand's width w, to be approx. equal to a third of width w.

The method calculates the nominal radius r according to the below specification:

$$\frac{0.2 * l}{\pi} \leq r \leq \frac{0.4 * l}{\pi}$$

and in particular:

$$r = \frac{0.3 * l}{\pi}$$

with:

    r: radius of the center of the handle core (mm),
    l: measured length of the user's hand (mm).

To present an optimal grip when the user pulls the roller suitcase of figure 1, the method also determines an angle α shown figure 6. Left side of figure 6 being the user's side, and right side of the figure being the suitcase side. Taking advantage of the ground's hand height h shown figure 5, the method calculates the angle α following the following criteria:

$$\arcsin\left(\frac{0.250 * h}{Dh}\right) \le \alpha \le \arcsin\left(\frac{0.460 * h}{Dh}\right)$$

and more advantageously:

$$\alpha = \arcsin\left(\frac{0.377 * h}{Dh}\right)$$

with:

h: user's height (mm),
Dh: Deployed height of the hand luggage (mm) (full height when the connecting rods 21 are fully extended).

Consequently, after assembly of the handle core 15 according to this specification, and when pulling the hand luggage 20, the user's fingers will naturally face the notches n and bump b, avoiding any discomfort of use.

In particular, the method also comprises the step of recording if the user is left handed or right handed to adequately adapt the handle core model. if the user is left handed, at least on mirror symmetry might be performed to the handle core model, which might be primarily built on statistical data for right handed persons.

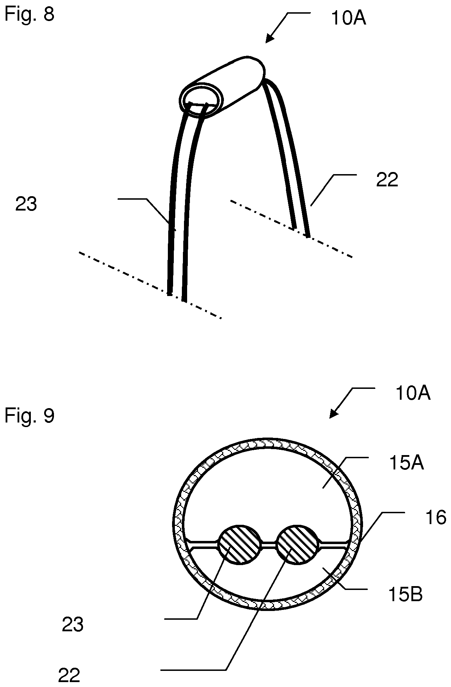

Figure 8 represents an alternative handle 10A, designed for a handbag having two handbag handles 22 and 23.

In such case, and as shown figure 9, it is advantageous to provide the handle core in two parts : a lower part 15B and an upper part 15B, so that the two halve can be joined to cover or clamp the handbag handles 22 and 23. An interesting aspect in this case is to measure the actual size of handbag handles 22 and 23, prior to manufacturing the handle 10A and the handle cores 15A, 15B, so that it is possible to provide a perfect fit to the assembly, and in particular to set to the handle 10A a predefined sliding capacity with the handbag handles 22, 23. In other words, if the user wants to set an easy sliding of the handle 10A, a gap of at least 0.5 mm is defined between the handle core 10A and the handbag handles 22, 23. On the contrary, if the user wants to set an easy sliding of the handle 10A, a gap of maximum 0.2 mm is defined between the handle core 10A and the handbag handles 22, 23. Then, the handle core model is defined according to this setup, and the handle cores 15A, 15B can be manufactured accordingly.

It has to be noticed that the lower part 15B is thinner than the upper part 15A, so that the trough holes of the handle 10A are offset, so as to provide a comfortable handling (palm of user grasping the handle 10A is away from the handbag handles 22, 23, so that there is low occurrence of contact).

Finally, the handle cores 15A, 15B are covered with a sheath 16. Optionally, the handle 10 might be hinged (not shown), with a locking mechanism (not shown), so that the user can remove the handle 10A from the handbag.

It is of course understood that obvious improvements and/or modifications for one skilled in the art may be implemented, still being under the scope of the invention as it is defined by the appended claims.

**Claims**

1. Method of manufacturing a handle core (15) for a hand luggage (20), comprising the steps of:

    - manufacturing a plurality of hand luggage handle cores,
    - providing at least one dimension of a user's hand,
    - generating a handle core model, based on said at least one provided dimension,
    - selecting one given handle core (15) among the plurality of pre manufactured hand luggage (20) handle cores (15), said given handle core (15) corresponding to the generated handle core model,

    wherein the step of generating the handle core model comprises a step of calculating a radius (r) of middle portion of the handle core (15), and wherein:

$$\frac{0.2 * l}{\pi} \le r \le \frac{0.4 * l}{\pi}$$

    and more advantageously, wherein:

$$r = \frac{0.3 * l}{\pi}$$

with:

r: radius of the middle portion of the handle core (mm),
l: measured length of the user's hand (mm).

2. Method of manufacturing a handle core (15) for a hand luggage (20), comprising the steps of:

- providing at least one dimension of a user's hand,
- generating a handle core model, based on said at least one provided dimension,
- manufacturing a hand luggage (20) handle core (15), according to the handle core model,

wherein the step of generating the handle core model comprises a step of calculating a radius (r) of middle portion of the handle core (15), and wherein:

$$\frac{0.2 * l}{\pi} \leq r \leq \frac{0.4 * l}{\pi}$$

and more advantageously, wherein:

$$r = \frac{0.3 * l}{\pi}$$

with:

r: radius of the middle portion of the handle core (mm),
l: measured length of the user's hand (mm).

3. Method of manufacturing a handle core (15) according to any one of the preceding claims, wherein the manufacturing step uses an additive technique.

4. Method of manufacturing a handle core (15) according to any one of the preceding claims, wherein the step of providing at least one dimension of a user's hand is performed with a digital instrument having a display, the method further comprising the steps of:

- displaying on the digital instrument the handle core model for a user review,
- receiving an agreement from the user via the digital instrument.

5. Method of manufacturing a handle core (15) according to any one of the preceding claims, comprising an initial phase of collecting a set of anthropometrical data, wherein the step of generating the handle core model comprises a step of calculating a dimension of the handle core model taking into account at least one of the collected anthropometrical data.

6. Method of manufacturing a handle core (15) according to claim 4 or according to claim 5 in its dependency to claim 4, comprising, before the step of receiving the user's agreement, a step of receiving a request for modification of the displayed handle core model and a step of recalculating at least one of the dimensions of the handle core model.

7. Method of manufacturing a handle core (15) according to the preceding claim, wherein

the step of displaying the handle core model comprises:

- a step of displaying the handle core model, and/or a cross section of the handle core model, and/or a profile of the handle core model on a touch screen,

the step of receiving a request for modification comprises:

    - a step of measuring a displacement of at least one contact on the touch screen of a user's finger,

the step of recalculating at least one dimension of the handle core model taking into account the measured displacement.

**8.** Method of manufacturing a handle core (15) according to claim 7, wherein the recalculated dimension is limited to differ from the initially generated dimension of $\pm20\%$ maximum.

**9.** Method of manufacturing a handle core (15) according to any one of the claims 7 to 8, wherein the handle core model comprises:

    - a bump arranged to face a user's palm or user's finger articulation, and/or
    - at least one transverse notch arranged to face a user's finger,

and wherein the step of receiving a request for modification of the displayed handle core model comprises a step of receiving a request for accentuating or minimizing the bump and/or the transverse notch.

**10.** Method of manufacturing a handle core (15) according to claim 4 or according to any one of the claims 5 to 9 in their dependency to claim 3, wherein the step of providing at least one dimension of the user's hand with the digital instrument comprises the steps of:

    - detecting a contact of the user's hand to be measured on the display,
    - displaying hand limits on the display,
    - authorizing displacement of the hand limits by a contact of the user on the display,
    - deducing the user's hand dimension based on a final position of the hand limits on the display.

**11.** Method of manufacturing a handle for a hand luggage (20), comprising the method of manufacturing a handle core (15) according to any one of the claims 1 to 10, and comprising a step of coating an external surface of the handle core (15), or applying a surface treatment to an external surface of the handle core (15), or performing a surface finishing, or wrapping the handle core (15) with an external layer or sheath.

**12.** Method of manufacturing a handle according to the preceding claim, comprising:

    - a step of acquiring a user's height or a user's hand-to-ground distance,
    - a step of determining an orientation angle ($\alpha$) between the handle core (15) and a connecting rod (21) of the hand luggage (20), taking into account the user's height or user's hand-to-ground distance,
    - a step of assembling the handle core (15) onto the connecting rod (21) of the hand luggage (20), with respect of the orientation angle ($\alpha$).

**13.** Method of manufacturing a handle according to the preceding claim, wherein the determined orientation angle ($\alpha$) between the handle core (15) and a connecting rod (21) of the hand luggage (20) is respecting the following formula:

$$\arcsin\left(\frac{0.250 * h}{Dh}\right) \le \alpha \le \arcsin\left(\frac{0.460 * h}{Dh}\right)$$

and more advantageously, wherein:

$$\alpha = \arcsin\left(\frac{0.377 * h}{Dh}\right)$$

with:

    h: user's height (mm),

Dh: Deployed height of the hand luggage (20) (mm).

14. Method of manufacturing a handle according to any one of the claims 11 to 13, and comprising:

- a step of determining an axial angle between the handle core (15) and a mono-connecting rod (21),
- a step of assembling the handle core (15) onto the mono-connecting rod (21) of the hand luggage (20), with respect of the axial angle.

15. Method of manufacturing a hand luggage (20), comprising:

- the method of manufacturing a handle according to any one of the claims 11 to 14,
- a step of attaching the handle to the hand luggage.

**Patentansprüche**

1. Verfahren zum Herstellen eines Griffkerns (15) für ein Handgepäck (20), das die folgenden Schritte umfasst:

- Herstellen einer Vielzahl von Handgepäckgriffkernen,
- Bereitstellen von mindestens einer Abmessung der Hand eines Benutzers,
- Erzeugen eines Griffkernmodells auf Basis der mindestens einen bereitgestellten Abmessung,
- Auswählen von einem gegebenen Griffkern (15) aus der Vielzahl von vorgefertigten Handgepäck(20)-Griffkernen (15), wobei der gegebene Griffkern (15) dem erzeugten Griffkernmodell entspricht,

wobei der Schritt des Erzeugens des Griffkernmodells einen Schritt des Berechnens eines Radius (r) eines mittleren Abschnitts des Griffkerns (15) umfasst und wobei:

$$\frac{0.2 * l}{\pi} \leq r \leq \frac{0.4 * l}{\pi}$$

und wobei noch vorteilhafter:

$$r = \frac{0.3 * l}{\pi}$$

mit:

r: Radius des mittleren Abschnitts des Griffkerns (mm),
l: gemessene Länge der Hand des Benutzers (mm).

2. Verfahren zum Herstellen eines Griffkerns (15) für ein Handgepäck (20), das die folgenden Schritte umfasst:

- Bereitstellen von mindestens einer Abmessung der Hand eines Benutzers,
- Erzeugen eines Griffkernmodells auf Basis der mindestens einen bereitgestellten Abmessung,
- Herstellen eines Handgepäck(20)-Griffkerns (15) gemäß dem Griffkernmodell,

wobei der Schritt des Erzeugens des Griffkernmodells einen Schritt des Berechnens eines Radius (r) eines mittleren Abschnitts des Griffkerns (15) umfasst und wobei:

$$\frac{0.2 * l}{\pi} \leq r \leq \frac{0.4 * l}{\pi}$$

und wobei noch vorteilhafter:

$$r = \frac{0.3 * l}{\pi}$$

mit:

r: Radius des mittleren Abschnitts des Griffkerns (mm),
l: gemessene Länge der Hand des Benutzers (mm).

3. Verfahren zum Herstellen eines Griffkerns (15) nach einem der vorhergehenden Ansprüche, wobei der Schritt des Herstellens eine additive Technik verwendet.

4. Verfahren zum Herstellen eines Griffkerns (15) nach einem der vorhergehenden Ansprüche, wobei der Schritt des Bereitstellens von mindestens einer Abmessung der Hand eines Benutzers mit einem digitalen Instrument mit einer Anzeige durchgeführt wird,
wobei das Verfahren ferner die folgenden Schritte umfasst:

- Anzeigen des Griffkernmodells auf dem digitalen Instrument zur Überprüfung durch einen Benutzer,
- Empfangen einer Zustimmung vom Benutzer via das digitale Instrument.

5. Verfahren zum Herstellen eines Griffkerns (15) nach einem der vorhergehenden Ansprüche, das eine Anfangsphase zum Sammeln eines Satzes von anthropometrischen Daten umfasst, wobei der Schritt des Erzeugens des Griffkernmodells einen Schritt des Berechnens einer Abmessung des Griffkernmodells unter Berücksichtigung von mindestens einem der gesammelten anthropometrischen Daten umfasst.

6. Verfahren zum Herstellen eines Griffkerns (15) nach Anspruch 4 oder nach Anspruch 5 in dessen Abhängigkeit von Anspruch 4, das vor dem Schritt des Empfangens der Zustimmung des Benutzers einen Schritt des Empfangens einer Anforderung zur Modifizierung des angezeigten Griffkernmodells und einen Schritt des erneuten Berechnens von mindestens einer der Abmessungen des Griffkernmodells umfasst.

7. Verfahren zum Herstellen eines Griffkerns (15) nach dem vorhergehenden Anspruch, wobei

der Schritt des Anzeigens des Griffkernmodells Folgendes umfasst:

- einen Schritt des Anzeigens des Griffkernmodells und/oder eines Querschnitts des Griffkernmodells und/oder eines Profils des Griffkernmodells auf einem Touchscreen,

der Schritt des Empfangens einer Anforderung zur Modifizierung Folgendes umfasst:

- einen Schritt des Messens eines Versatzes von mindestens einem Kontakt des Fingers eines Benutzers auf dem Touchscreen,

wobei der Schritt des erneuten Berechnens von mindestens einer Abmessung des Griffkernmodells den gemessenen Versatz berücksichtigt.

8. Verfahren zum Herstellen eines Griffkerns (15) nach Anspruch 7, wobei die erneut berechnete Abmessung derart begrenzt ist, dass sie sich von der anfänglich erzeugten Abmessung um maximal ±20 % unterscheidet.

9. Verfahren zum Herstellen eines Griffkerns (15) nach einem der Ansprüche 7 bis 8,
wobei das Griffkernmodell Folgendes umfasst:

- eine Erhöhung, die angeordnet ist, einer Handfläche eines Benutzers oder einer Fingerbewegung eines Benutzers zugewandt zu sein, und/oder
- mindestens eine Querkerbe, die angeordnet ist, einem Finger eines Benutzers zugewandt zu sein,

und wobei der Schritt des Empfangens einer Anforderung zur Modifizierung des angezeigten Griffkernmodells einen Schritt des Empfangens einer Anforderung zum Akzentuieren oder Minimieren der Erhöhung und/oder der Querkerbe umfasst.

**10.** Verfahren zum Herstellen eines Griffkerns (15) nach Anspruch 4 oder nach einem der Ansprüche 5 bis 9 in deren Abhängigkeit von Anspruch 3, wobei der Schritt des Bereitstellens von mindestens einer Abmessung der Hand des Benutzers mit dem digitalen Instrument die folgenden Schritte umfasst:

- Detektieren eines Kontakts der Hand des Benutzers, die auf der Anzeige zu messen ist,
- Anzeigen von Handgrenzen auf der Anzeige,
- Autorisieren eines Versatzes der Handgrenzen durch einen Kontakt des Benutzers auf der Anzeige,
- Ableiten der Handabmessung des Benutzers auf Basis einer Endposition der Handgrenzen auf der Anzeige.

**11.** Verfahren zum Herstellen eines Griffs für ein Handgepäck (20), das das Verfahren zum Herstellen eines Griffkerns (15) nach einem der Ansprüche 1 bis 10 umfasst,
und das einen Schritt des Beschichtens einer Außenfläche des Griffkerns (15) oder des Anwendens einer Flächenbehandlung einer Außenfläche des Griffkerns (15) oder des Durchführens einer Flächenveredelung oder des Umwickelns des Griffkerns (15) mit einer äußeren Schicht oder Hülle umfasst.

**12.** Verfahren zum Herstellen eines Griffs nach dem vorhergehenden Anspruch, das Folgendes umfasst:

- einen Schritt des Erfassens der Größe eines Benutzers oder des Hand-Boden-Abstands eines Benutzers,
- einen Schritt des Bestimmens eines Ausrichtungswinkels ($\alpha$) zwischen dem Griffkern (15) und einer Verbindungsstange (21) des Handgepäcks (20) unter Berücksichtigung der Größe des Benutzers oder des Hand-Boden-Abstands des Benutzers,
- einen Schritt des Montierens des Griffkerns (15) an der Verbindungsstange (21) des Handgepäcks (20) mit Bezug auf den Ausrichtungswinkel ($\alpha$).

**13.** Verfahren zum Herstellen eines Griffs nach dem vorhergehenden Anspruch, wobei der bestimmte Ausrichtungswinkel ($\alpha$) zwischen dem Griffkern (15) und einer Verbindungsstange (21) des Handgepäcks (20) die folgende Formel respektiert:

$$\arcsin\left(\frac{0.250 * h}{Dh}\right) \leq \alpha \leq \arcsin\left(\frac{0.460 * h}{Dh}\right)$$

und wobei noch vorteilhafter:

$$\alpha = \arcsin\left(\frac{0.377 * h}{Dh}\right)$$

mit:

h: Größe des Benutzers (mm),
Dh: eingesetzte Größe des Handgepäcks (20) (mm).

**14.** Verfahren zum Herstellen eines Griffs nach einem der Ansprüche 11 bis 13, das Folgendes umfasst:

- einen Schritt des Bestimmens eines Axialwinkels zwischen dem Griffkern (15) und einer einzelnen Verbindungsstange (21),
- einen Schritt des Montierens des Griffkerns (15) an der einzelnen Verbindungsstange (21) des Handgepäcks (20) mit Bezug auf den Axialwinkel.

**15.** Verfahren zum Herstellen eines Handgepäcks (20), das Folgendes umfasst:

- das Verfahren zum Herstellen eines Griffs nach einem der Ansprüche 11 bis 14,
- einen Schritt des Befestigen des Griffs am Handgepäck.

**Revendications**

1. Procédé pour fabriquer un noyau de poignée (15) pour un bagage à main (20), comprenant les étapes consistant à :

   - fabriquer une pluralité de noyaux de poignée pour bagage à main,
   - procurer au moins une dimension d'une main d'un utilisateur,
   - générer un modèle de noyau de poignée, sur la base de ladite au moins une dimension prévue,
   - sélectionner un noyau de poignée (15) donné parmi la pluralité de noyaux de poignée (15) pour bagage à main (20) préfabriqués, ledit noyau de poignée (15) donné correspondant au modèle de noyau de poignée généré,

   dans lequel l'étape consistant à générer le modèle de noyau de poignée comprend une étape consistant à calculer un rayon (r) de partie centrale du noyau de poignée (15), et dans lequel :

   $$\frac{0.2 * l}{\pi} \leq r \leq \frac{0.4 * l}{\pi}$$

   et plus avantageusement, dans lequel :

   $$r = \frac{0.3 * l}{\pi}$$

   avec :

   r : rayon de la partie centrale du noyau de poignée (mm),
   1 : longueur mesurée de la main de l'utilisateur (mm).

2. Procédé pour fabriquer un noyau de poignée (15) pour un bagage à main (20) comprenant les étapes consistant à :

   - procurer au moins une dimension d'une main d'un utilisateur,
   - générer un modèle de noyau de poignée, sur la base de ladite au moins une dimension prévue,
   - fabriquer un noyau de poignée (15) pour bagage à main (20), selon le modèle de noyau de poignée,

   dans lequel l'étape consistant à générer le modèle de noyau de poignée comprend une étape consistant à calculer un rayon (r) de partie centrale du noyau de poignée (15), et dans lequel :

   $$\frac{0.2 * l}{\pi} \leq r \leq \frac{0.4 * l}{\pi}$$

   et plus avantageusement dans lequel :

   $$r = \frac{0.3 * l}{\pi}$$

   avec :

   r : rayon de la partie centrale du noyau de poignée (mm),
   1 : longueur mesurée de la main de l'utilisateur (mm).

3. Procédé pour fabriquer un noyau de poignée (15) selon l'une quelconque des revendications précédentes, dans lequel l'étape de fabrication utilise une technique additive.

4. Procédé pour fabriquer un noyau de poignée (15) selon l'une quelconque des revendications précédentes, dans lequel l'étape consistant à prévoir au moins une dimension de la main d'un utilisateur est réalisée avec un instrument digital ayant un affichage,
le procédé comprenant en outre les étapes consistant à :

- afficher, sur l'instrument digital, le modèle de noyau de poignée pour un avis utilisateur,
- recevoir un accord de la part de l'utilisateur, via l'instrument digital.

**5.** Procédé pour fabriquer un noyau de poignée (15) selon l'une quelconque des revendications précédentes, comprenant une phase initiale pour collecter un ensemble de données anthropométriques, dans lequel l'étape consistant à générer le modèle de noyau de poignée comprend une étape consistant à calculer une dimension du modèle de noyau de poignée prenant en compte au moins l'une des données anthropométriques collectées.

**6.** Procédé pour fabriquer un noyau de poignée (15) selon la revendication 4 ou selon la revendication 5 dans sa dépendance à la revendication 4, comprenant, avant l'étape consistant à recevoir l'accord de l'utilisateur, une étape consistant à recevoir une requête de modification du modèle de noyau de poignée affiché et une étape consistant à recalculer au moins l'une des dimensions du modèle de noyau de poignée.

**7.** Procédé pour fabriquer un noyau de poignée (15) selon la revendication précédente, dans lequel :

l'étape consistant à afficher le modèle de noyau de poignée comprend :

- une étape consistant à afficher le modèle de noyau de poignée, et/ou une section transversale du modèle de noyau de poignée, et/ou un profil du modèle de noyau de poignée sur un écran tactile,

l'étape consistant à recevoir une requête pour modification comprend :

- une étape consistant à mesurer un déplacement d'au moins un contact sur l'écran tactile du doigt d'un utilisateur,

l'étape consistant à recalculer au moins une dimension du modèle de noyau de poignée prenant en compte le déplacement mesuré.

**8.** Procédé pour fabriquer un noyau de poignée (15) selon la revendication 7, dans lequel la dimension recalculée est limitée afin qu'elle soit différente de la dimension initialement générée de $\pm$ 20 % maximum.

**9.** Procédé pour fabriquer un noyau de poignée (15) selon l'une quelconque des revendications 7 à 8,
dans lequel le modèle de noyau de poignée comprend :

- une bosse agencée pour faire face à la paume d'un utilisateur ou à l'articulation des doigts d'un utilisateur, et/ou
- au moins une encoche transversale agencée pour faire face aux doigts d'un utilisateur,
- et dans lequel l'étape consistant à recevoir une requête pour modification du modèle de noyau de poignée affiché comprend une étape consistant à recevoir une requête pour accentuer ou minimiser la bosse et/ou l'encoche transversale.

**10.** Procédé pour fabriquer un noyau de poignée (15) selon la revendication 4 ou selon l'une quelconque des revendications 5 à 9 dans leur dépendance à la revendication 3, dans lequel l'étape consistant à prévoir au moins une dimension de la main de l'utilisateur avec l'instrument digital comprend les étapes consistant à :

- détecter un contact de la main d'un utilisateur à mesurer sur l'affichage,
- afficher les limites de main sur l'affichage,
- autoriser le déplacement des limites de main par un contact de l'utilisateur sur l'affichage,
- déduire la dimension de la main de l'utilisateur sur la base d'une position définitive des limites de main sur l'affichage.

**11.** Procédé pour fabriquer une poignée pour un bagage à main (20), comprenant le procédé pour fabriquer un noyau de poignée (15) selon l'une quelconque des revendications 1 à 10, et comprenant une étape consistant à recouvrir une surface externe du noyau de poignée (15) ou appliquer un traitement de surface sur une surface externe du noyau de poignée (15) ou réaliser une finition de surface ou envelopper le noyau de poignée (15) avec une couche externe ou gaine.

**12.** Procédé pour fabriquer une poignée selon la revendication précédente, comprenant :

- une étape consistant à acquérir la taille d'un utilisateur ou la distance main - sol d'un utilisateur,
- une étape consistant à déterminer un angle d'orientation ($\alpha$) entre le noyau de poignée (15) et une tige de raccordement (21) du bagage à main (20), prenant en compte la taille de l'utilisateur ou la distance main - sol de l'utilisateur,
- une étape consistant à assembler le noyau de poignée (15) sur la tige de raccordement (21) du bagage à main (20) par rapport à l'angle d'orientation ($\alpha$).

**13.** Procédé pour fabriquer une poignée selon la revendication précédente, dans lequel l'angle d'orientation ($\alpha$) déterminé entre le noyau de poignée (15) et une tige de raccordement (21) du bagage à main (20) respecte la formule suivante :

$$\arcsin\left(\frac{0.250 * h}{Dh}\right) \leq \alpha \leq \arcsin\left(\frac{0.460 * h}{Dh}\right)$$

et plus avantageusement, dans lequel :

$$\alpha = \arcsin\left(\frac{0.377 * h}{Dh}\right)$$

avec :

h : taille de l'utilisateur (mm),
Dh : hauteur déployée du bagage à main (20) (mm).

**14.** Procédé pour fabriquer une poignée selon l'une quelconque des revendications 11 à 13, et comprenant :

- une étape consistant à déterminer un angle axial entre le noyau de poignée (15) et une mono-tige de raccordement (21),
- une étape consistant à assembler le noyau de poignée (15) sur la mono-tige de raccordement (21) du bagage à main (20), par rapport à l'angle axial.

**15.** Procédé pour fabriquer un bagage à main (20) comprenant :
le procédé pour fabriquer une poignée selon l'une quelconque des revendications 11 à 14,

- une étape consistant à fixer la poignée sur le bagage à main.

Fig. 1

10

21

20

Fig. 2

b

ga

15

pa

d

Fig. 3

15

11

Fig. 4a

Fig. 4b

Fig. 5

Fig. 6

15

α

21

50

A1   A2   A3   A4   B1   B2   B3

A

B

Fig. 7

Fig. 8

10A

22

23

Fig. 9

10A

15A

16

15B

23

22

**EP 3 768 112 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- FR 1112170 A
- US 2006137144 A1
- WO 2016154340 A1